# EUROPÄISCHE PATENTSCHRIFT

(11) **EP 2 351 332 B1**
(45) Veröffentlichungstag und Bekanntmachung des Hinweises auf die Patenterteilung: **09.11.2016**
(21) Anmeldenummer: 09748966.0
(22) Anmeldetag: 24.09.2009
(51) Int. Cl.: H04L 29/12, H04L 29/06

(54) **VERFAHREN UND EINRICHTUNG ZUR BIDIREKTIONALEN ADRESSUMSETZUNG IN SIP-GESTEUERTEN DATENSTRÖMEN ZWISCHEN IPV4- UND IPV6- DATENENDGERÄTEN**
METHOD AND DEVICE FOR THE BIDIRECTIONAL ADDRESS CONVERSION IN SIP-CONTROLLED DATA STREAMS BETWEEN IPV4 AND IPV6 DATA TERMINALS
PROCÉDÉ ET DISPOSITIF DE CONVERSION D'ADRESSE BIDIRECTIONNELLE DANS DES FLUX DE DONNÉES À COMMANDE SIP ENTRE DES TERMINAUX DE TRAITEMENT DE DONNÉES IPV4 ET IPV6

(30) Priorität: 25.09.2008 DE 102008048872
(43) Veröffentlichungstag der Anmeldung: 03.08.2011
(73) Patentinhaber: Unify GmbH & Co. KG, 80807 München (DE)
(72) Erfinder: HORVATH, Ernst, A-1060 Wien (AT); ZINGERLE, Meinrad, A-1140 Wien (AT)
(74) Vertreter: Fritzsche, Thomas
(86) Internationale Anmeldenummer: PCT/EP2009/006914
(87) Internationale Veröffentlichungsnummer: WO 2010/034499

(56) Entgegenhaltungen:
- EP-A2- 1 515 508
- DE-A1-102004 050 572
- TSIRTSIS G ET AL: "Network Address Translation - Protocol Translation (NAT-PT)" INTERNET CITATION 1. Februar 2000 (2000-02-01), XP002167711 Gefunden im Internet: URL:http://www.faqs.org/rfcs/rfc2766.html> [gefunden am 2001-05-18]

## Beschreibung

### Technisches Gebiet

Die Erfindung betrifft ein Verfahren und eine Einrichtung zur bidirektionalen Adressumsetzung in SIP-gesteuerten Datenströmen zwischen IPv4- und IPv6-Datenendgeräten.

### Stand der Technik

Telefonanlagen (PABX, engl. Private Automatic Branch Exchange) sind Vermittlungseinrichtungen, die mehrere Endgeräte wie zum Beispiel Telefon, Fax, Anrufbeantworter sowohl untereinander als auch mit dem öffentlichen Telefonnetz verbinden. Der grundsätzliche Funktionsbestandteil zum Erfüllen dieser Aufgabe ist das sogenannte Koppelfeld, dessen Ein- und Ausgangskanäle durch ein Steuerwerk geschaltet werden. Telefonanlagen erfüllen eine Vielzahl an Diensten, wie z.B. das Weiterverbinden, Makeln, Rufumleitungen, Konferenzgespräche. Ebenso werden in Telefonanlagen jedem einzelnen angeschlossenen Endgerät bestimmte Rechte zugeordnet, beispielsweise das Recht (kostenpflichtige) externe, sogenannte "Amtsgespräche" aufzubauen.

Moderne Telefonanlagen erfüllen diese Aufgaben mittels der sogenannten IP-Technologie (Internet Protokoll), bei welcher die einzelnen Endgeräte nicht mehr mittels eigener Verkabelung an die Telefonanlage angeschlossen werden, sondern wie PCs (Personal Computer) mittels eines Datennetzes angebunden sind. In IP-Netzen werden die Nutzdaten (im Allgemeinen digitalisierte Sprachdaten) zu Datenpaketen zusammengefasst und mit einer Absenderadresse und einer Zieladresse versehen, worauf die Netzwerkinfrastruktur mittels dieser Zieladresse das Zustellen des Datenpakets an das Endgerät vornimmt.

Das dabei übliche IPv4 (Internet Protokoll Version 4) bietet einen Adressraum von 2³² (= 4294976296) möglichen Adressen, welcher derzeit zu einem großen Teil bereits ausgeschöpft ist. Die Weiterentwicklung von IPv4, das sogenannte IPv6 welches diese Beschränkung auflösen soll, bietet einen wesentlichen größeren Adressraum von 2¹²⁸ möglichen Adressen. IPv6 ist in "Internet Protokoll, Version 6 Specification; RFC2460 der IETF standardisiert. Die Verbindung von (Teil)Netzen mit jeweils unterschiedlichem Internet Protokoll (IPv4 und IPv6) stellt eine Problematik dar, die im SIP-Umfeld gemäß dem Stand der Technik mittels des ICE-Protokolls (engl.: interaktive connectivity establishment, http://tools.ietf.org/html/draft-ietf-mmusic-ice-19) gelöst wird, wobei es erforderlich ist, dass alle beteiligten Endgeräte gemäß des ICE-Protokolls agieren können und ein von allen beteiligten Endgeräten erreichbarer zentraler Server die Weiterleitung der Nutzdaten vornimmt. Dabei stellt sich als nachteilig heraus, dass das ICE-Protokoll in allen beteiligten Endgeräten eingesetzt werden muß, wozu aufwendige Änderungen der Steuersoftware jedes Gerätes erforderlich sein können.

EL MALKI, Karim [et al.]: "IPv6-IPv4 Translation mechanism for SIP-based services in Third Generation Partnership Project (3GPP) Networks. Network Working Group", Internet Draft, Dezember 2003, URL: http://tools.ietf.org/html/draft-elmalki-sipping3gpp-translator-00 offenbart ein Verfahren zur bidirektionalen Adressumsetzung in SIP-gesteuerten Datenströmen zwischen IPv6-fähigen Datenendgeräten und IPv4-fähigen Datenendgeräten.

TSIRTSIS G ET AL: "Network Address Translation - Protocol Translation (NAT-PT)" INTERNET CITATION, Februar 2000 XP002167711, gefunden am 2001-05-18 im Internet: URL:http://www.faqs.org/rfcs/rfc2766.html> offenbart einen IPv4 zu IPv6 Umsetzungsmechanismus nach RFC2766.

DE 10 2004 050 572 A1 zeigt, dass in einem IPv4/IPv6 Dual Netzwerk die Datenübertragung zwischen einem IPv4/IPv6 Dual SIP Endgerät und einem IPv4 Endgerät erfolgen kann, wobei die Endgeräte sich auf eine IPv4 Übertragung einigen müssen.

EP 1 515 508 A2 zeigt, dass in einem IPv4/IPv6 Dual Netzwerk die Datenübertragung zwischen einem IPv4/IPv6 Dual SIP Endgerät und einem IPv4 Endgerät über einen IPv4/IPv6 Dual SIP Servers erfolgen kann.

### Darstellung der Erfindung

Der Erfindung liegt daher die Aufgabe zugrunde, ein Verfahren und eine Einrichtung zur verbesserten bidirektionalen Adressumsetzung in SIP-gesteuerten Datenströmen zwischen IPv4- und IPv6-Datenendgeräten anzugeben.

Die Aufgabe wird durch ein Verfahren zur bidirektionalen Adressumsetzung in SIP-gesteuerten Datenströmen zwischen IPv4-fähigen Datenendgeräten und IPv6-fähigen Datenendgeräten mittels eines Adressumsetzers und eines SIP-Servers nach Anspruch 1 bzw. 2 und einer Einrichtung zur bidirektionalen Adressumsetzung in SIP-gesteuerten Datenströmen zwischen IPv4-fähigen Datenendgeräten und IPv6-fähigen Datenendgeräten mittels eines Adressumsetzers und eines SIP-Servers nach Anspruch 5 bzw. 6 gelöst. Vorteilhafte Ausgestaltungen sind Gegenstand von abhängigen Ansprüchen.

Dem Grundgedanken der Erfindung nach wird mittels Zwischenschaltung eines Adressumsetzers die Signalisierung und die Datenübertragung zwischen den beteiligten IPv4- und IPv6-fähigen Endgeräten in solcher Form verändert, dass alle beteiligten Endgeräte ausschließlich Signalisierungsnachrichten und Datenpakete mit kompatibler Internet Protokoll Version senden und empfangen.

Damit ist der Vorteil erzielbar, class ein Kommunikationsnetz aus gemischten IPv4- und IPv6-Bereichen aufgebaut werden kann und zur Ermöglichung des Datentransfers über diese Konmunikationsbereichsgrenzen hinweg nur an einer einzigen Stelle eine Änderung vorgenommen werden muß.

Dies ist besonders vorteilhaft in Telekommunikationsnetzen mit gemischten IPv4- und IPv6-Bereichen, da mittels gegenständlicher Erfindung der zentrale Telekommunikationsserver (SIP-Server) in Verbindung mit dem zentralen Adressumsetzer alle Signalisierungs- und Datenpaketmodifikationen vornehmen kann und die einzelnen Telekommunikationsendgeräte unverändert bleiben können. Insbesondere bei der Erweiterung bestehender, auf IPv4 basierender Telekommunicationsnetze mit IPv6-fähigen SIP-Servern und Telekommunikationsendgeräten ist das gegenständliche Verfahren besonders vorteilhaft einzusetzen.

Der Hauptaspekt der erfindungsgemäß nach Anspruch 1 bzw. 5 vorgeschlagenen Lösung liegt darin, dass bei der Verbindungsaufnahme von einem IPv6-fähigen Datenendgerät zu einem IPv4-fähigen Datenendgerät eine bestimmte, den Verbindungswunsch anzeigende Nachricht gesandt wird, welche für das IPv4-fähige Datenendgerät unverständlich ist, da die in dieser Nachricht enthaltene IPv6-Adresse des die Verbindung initiierenden Datenendgeräts vom IPv4-fähigen Datenendgerät nicht verwendet werden kann. Erfindungsgemäß wird die vom IPv4-fähigen Datenendgerät daraufhin gesandte Nachricht, welche einen unverständlichen Verbindungsaufnahmewunsch anzeigt, von einem den Adressumsetzer enthaltenen Server abgefangen und nicht dem IPv6-fähigen Datenendgerät zugestellt.

Solcherart gelingt es, mittels des SIP-Servers und eines Adressumsetzers die zur Verbindungsaufnahme erforderlichen Signalisierungsnachrichten ausschließlich zwischen dem beteiligten IPv6-fähigen Datenendgerät und dem SIP-Server sowie dem IPv4-fähigen Datenendgerät und dem SIP-Servers auszutauschen, wobei jedem Datenendgerät ein Verbindungspartner mit kompatibler IP-Version dargeboten wird.

Die Verbindungsaufnahme zu einem IPv4-fähigen Datenendgerät stellt sich durch das erfindungsgemäße Verfahren für ein IPv6-fähiges Datenendgerät gleichartig dar wie bei einer Verbindungsaufnahme zu einem IPv6-fähigen Datenendgerät. Seitens des IPv4-fähigen Datenendgeräts führt eine Verbindungsaufnahme durch ein IPv6-fähiges Datenendgerät zu einer einmaligen Aussendung einer den Verbindungswunsch zurückweisenden Nachricht.

Der Nebenaspekt der erfingdungsgemäß nach Anspruch 2 bzw. 6 vorgeschlagenen Lösung liegt darin, dass bei der Verbindungsaufnahme von einem IPv4-fähigen Datenendgerät zu einem IPv6-fähigen Datenendgerät eine bestimmte, den Verbindungswunsch anzeigende Nachricht gesandt wird, welche für das IPv6-fähige Datenendgerät unverständlich ist, da die in dieser Nachricht enthaltene IPv4-Adresse des die Verbindung initiierenden Datenendgerät vom IPv6-fähigen Datenendgerät nicht verwendet werden kann. Erfindungsgemäß wird die vom IPv6-fähigen Datenendgerät daraufhin gesandte Nachricht, welche einen unverständlichen Verbindungsaufnahmewunsch anzeigt, von einem den Adressumsetzers enthaltenden Server abgefangen und nicht dem IPv4-fähigen Datenendgerät zugestellt.

Solcherart gelingt es in gleicher Weise wie bei der erfindungsgemäßen Lösung gemäß dem Hauptaspekt, mittels des SIP-Servers und eines Adressumsetzer die zur Verbindungsaufnahme erforderlichen Signalisierungsnachrichten ausschließlich zwischen dem beteiligten IPv4-fähigen Datenendgerät und dem SIP-Server sowie dem IPv6-fähigen Datenendgerät und dem SIP-Server auszutauschen, wobei jedem Datenendgerät ein Verbindungspartner mit kompatibler IP-Version dargeboten wird.

Die Verbindungsaufnahme zu einem IPv6-fähigen Datenendgerät stellt sich durch das erfindungsgemäße Verfahren für ein IPv4-fähiges Datenendgerät gleichartig dar wie bei einer Verbindungsaufnahme zu einem IPv4-fähigen Datenendgerät. Seitens des IPv6-fähigen Datenendgeräts führt eine Verbindungsaufnahme durch ein IPv4-fähiges Datenendgerät zu einer einmaligen Aussendung einer den Verbindungswunsch zurückweisenden Nachricht.

Im Ablauf der Signalisierung während der Verbindungsaufnahme werden sowohl bei der erfindungsgemäßen Lösung gemäß dem Hauptaspekt als auch bei der erfindungsgemäßen Lösung gemäß dem Nebenaspekt mittels eines Adressumsetzers sowohl eine IPv4- als auch eine IPv6-Adresse jeweils bestimmt und diese Adressen den jeweiligen Datenendgeräten als Zieladresse für die weitere Datenübertragung übermittelt.

Während der Datenpaketübertragung senden alle beteiligten Datenendgeräte Datenpakte an die ihnen im Verlauf der Signalisierung während der Verbindungsaufnahme mitgeteilten (kompatiblen) IP-Adressen, wobei ein Adressumsetzer der Empfänger dieser Datenpakete ist, welcher die entsprechenden Austauschvorgänge (IPv4 Adressen mit IPv6 Adressen und umgekehrt) vornimmt und die Datenpakte an die jeweiligen empfangenden (im jeweils anderen IP-Protokoll Bereich liegenden) Datenendgeräte übermittelt.

Mit den erfindungsgemäßen Verfahren gelingt es, eine transparente Datenübertragung zwischen IPv4- und IPv6-fähigen Datenendgeräten vorzunehmen, wobei alle beteiligten Datenendgeräte ausschließlich SIP Konformität (gemäß der SIP Standards RFC 3261, RFC 3515 und RFC 3911) besitzen müssen.

Ein in auf SIP-Servern basierenden Telefonanlagen häufig vorgesehener Konferenzserver umfasst die zur Umsetzung des erfindungsgemäßen Verfahrens erforderlichen Adressumsetzungsmittel. Es ist deshalb vorteilhaft, diesen Konferenzserver zur Umsetzung der Zieladressen heranzuziehen, wobei die Signalisierung entsprechend anzupassen ist. Damit gelingt es, die bidirektionalen Adressumsetzungen in SIP-gesteuerten Datenströmen zwischen IPv4- und IPv6-Datenendgeräten mit geringerem Aufwand umzusetzen.

Eine Ausführungsform der Erfindung sieht vor, das erfindungsgemäße Verfahren in der Steuersoftware eines, eine Telefonanlage bildenden SIP-Servers umzusetzen.

Eine weitere Ausführungsform der Erfindung sieht vor, das erfindungsgemäße Verfahren in der Steuersoftware eines vom SIP-Server getrennten weiteren (externen) Servers umzusetzen.

### Kurzbeschreibung der Zeichnungen

Es zeigen beispielhaft:
**Fig.1** die Darstellung des prinzipiellen Aufbaus eines Kommunikationsnetzes mit IPv6 und IPv4 Teilen.
**Fig.2** die Darstellung des prinzipiellen Aufbaus eines Kommunikationsnetzes mit IPv6 und IPv4 Teilen und einem Konferenzserver.
**Fig.3** die Darstellung des prinzipiellen Ablaufs der Signalisierung des erfindungsgemäßen Verfahrens.
**Fig.4** die Darstellung des prinzipiellen Ablaufs der Signalisierung des erfindungsgemäßen Verfahrens bei Einsatz eines Konferenzservers.

### Ausführung der Erfindung

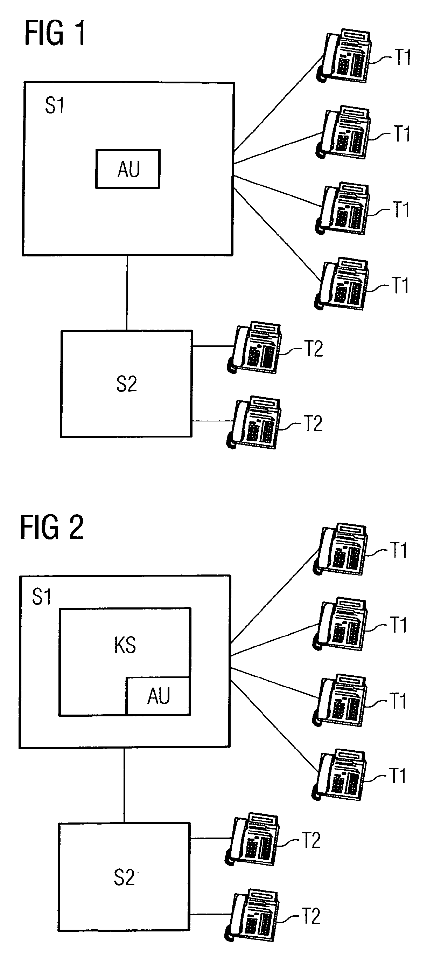

**Fig.1** zeigt beispielhaft und schematisch den prinzipiellen Aufbau eines Kommunikationsnetzes mit IPv6 und IPv4 Teilen. Es ist ein SIP-Server S1 dargestellt, welcher die Funktionalitäten einer Telefonanlage umsetzt und vier an diesen SIP-Server S1 angebundene Endgeräte T1. Diese Endgeräte T1 benutzen das IPv6 Protokoll.

Ein weiterer SIP-Server S2 ist mittels einer Datenverbindung an den ersten SIP Server S1 angebunden. An diesen zweiten SIP-Server S2 sind zwei Endgeräte T2 angebunden, welche (ausschließlich) das IPv4 Protokoll benutzen. Der zweite SIP-Server S2 hat keine über das normale SIP Protokoll hinausgehenden Aufgaben und dient lediglich zur Illustration, dass die gegenständliche Erfindung in einer vernetzten Umgebung eingesetzt werden kann und auch in diesem Fall nur an einer zentralen Stelle implementiert werden muss; die Endgeräte T2 könnten statt dessen auch direkt an den SIP-Server S1 angeschlossen sein.

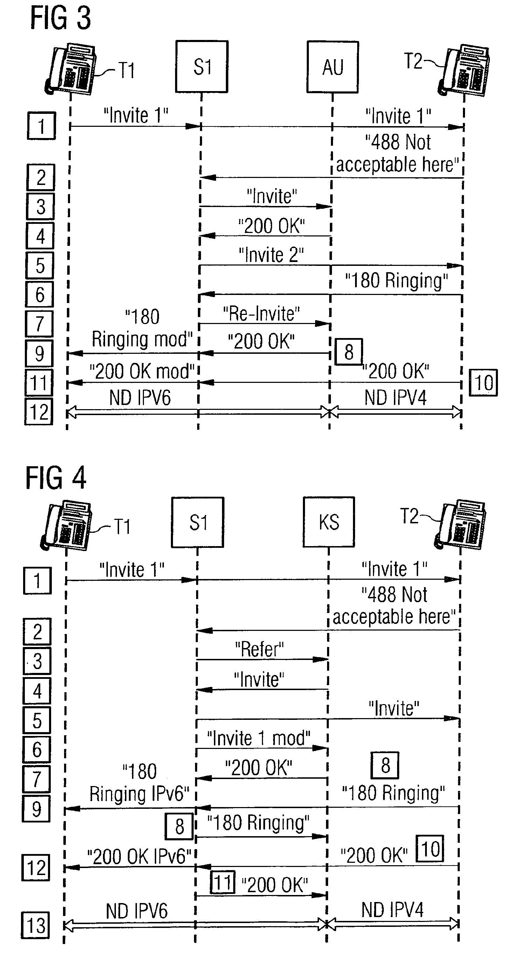

Der erste SIP-Server S1 umfasst einen Adressumsetzer AU, welcher die zwischen IPv4-fähigen Endgeräten T2 und IPv6-fähigen Endgeräten T1 übertragenen bidirektionalen Datenströme umsetzt. Dazu modifiziert der Adressumsetzer AU die von den beteiligten IPv6-fähigen Endgeräten T1 ausgesandten Datenpakete in solcher Form, dass diese Datenpakete eine gültige IPv4-Steuerinformation (IP-Header) erhalten und modifiziert die von den beteiligten IPv4-fähigen Endgeräten T2 ausgesandten Datenpakete in solcher Form, dass diese Datenpakete eine gültige IPv6-Steuerinformation (IP-Header) erhalten. Die dazu erforderlichen Zieladressinformationen (IP-Adressen) werden in den erfindungsgemäßen Verfahrensschritten vor Beginn der Nutzdatenübertragung zwischen den beteiligten Endgeräten und dem ersten SIP-Server S1 ermittelt (Fig.3).

**Fig.2** zeigt beispielhaft und schematisch den prinzipiellen Aufbau eines Kommunikationsnetzes mit IPv6 und IPv4 Teilen und einem Konferenzserver. Der Aufbau des Kommunikationsnetzes entspricht dem in Fig.1 dargestellten Beispiel, wobei der Adressumsetzer AU in einen Konferenzserver KS des ersten SIP-Servers S1 integriert ist.

**Fig.3** zeigt beispielhaft und schematisch den prinzipiellen Ablaufs der Signalisierung des erfindungsgemäßen Verfahrens. Es sind die Signalisierungsnachrichten in einem Kommunikationsnetz gemäß Fig.1 dargestellt, welche zwischen den beteiligten Endgeräten T1, T2, dem SIP-Server S1 und dem Adressumsetzer AU bei der Aufnahme der Datenübertragung von einem IPv6-fähigen Endgerät T1 zu einem IPv4-fähigen Endgerät T2 übertragen werden. Der zweite SIP-Server S2 nimmt keine Veränderungen an den durch ihn geleiteten Nachrichten vor und ist deshalb nicht dargestellt.

Die Signalisierung umfasst folgende Ablaufschritte:
1. Senden einer "Invite 1" Nachricht von einem IPv6-fähigen Endgerät T1 zu einem IPv4-fähigen Endgerät T2. Diese "Invite 1" Nachricht enthält eine Übertragungsbeschreibung (SDP, engl. Session Description Protokoll) und die IPv6-Adresse des Endgeräts T1, welche für das IPv4-fähige Endgerät T2 unverständlich ist. Der SIP-Server S1 modifiziert diese "Invite 1" Nachricht nicht.
2. Senden einer "488 Not acceptable here" Antwortnachricht durch das IPv4-fähige Endgerät T2 auf diese, für das IPv4-fähige Endgerät T2 unverständliche, Nachricht. Diese Nachricht wird vom SIP-Server S1 empfangen und nicht an das IPv6-fähige Endgerät T1 weitergeleitet.
3. Initialisieren des Adressumsetzers AU mittels einer "Invite"-Nachricht, welche die IPv6-Adresse des IPv6-fähigen Endgeräts T1 und die IPv4-Adresse 0.0.0.0 enthält.
4. Senden einer die erfolgreiche Initialisierung bestätigenden "200-OK"-Nachricht des Adressumsetzers AU an den SIP-Server S1, beinhaltend die IPv6-Adresse des IPv6-fähigen Endgeräts T1 und eine vom Adressumsetzer AU bestimmte IPv4 Adresse.
5. Senden einer "Invite 2" Nachricht vom SIP-Server S1 an das IPv4-fähige Endgerät T2, beinhaltend die im vorhergehenden Signalisierungsschritt 4 vom Adressumsetzer AU bestimmte IPv4 Adresse.
6. Senden einer "180 Ringing" Nachricht, welche den Empfang und die Gültigkeit der empfangenen "Invite 2" Nachricht bestätigt, vom IPv4-fähigen Endgerät T2 an den SIP-Server S1 und speichern dieser Nachricht im SIP-Server S1.
7. Senden einer "Re-Invite" Nachricht vom SIP-Server S1 an den Adressumsetzer AU, beinhaltend eine modifizierte Übertragungsbeschreibung (SDP), welche die IPv4-Adresse des IPv4-fähigen Endgeräts enthält.
8. Senden einer die erfolgreiche Initialisierung bestätigenden "200-OK"-Nachricht des Adressumsetzers AU an den SIP-Server S1, beinhaltend die IPv6-Adresse des IPv6-fähigen Endgeräts T1 und eine vom Adressumsetzer AU bestimmte IPv6 Adresse
9. Modifizieren der im SIP-Server S1 gespeicherten "180 Ringing" Nachricht, wobei die Zieladresse des IPv4-fähigen Endgeräts T2 mit der IPv6-Adresse des Adressumsetzers AU ersetzt wird, und zustellen dieser modifizierten "180 Ringing mod" Nachricht an das IPv6-fähige Endgerät T1.
10. Senden einer den erfolgreichen Verbindungsaufbau bestätigenden "200-OK"-Nachricht vom IPv4-fähigen Endgerät T2 an den SIP-Server S1, welcher diese Nachricht speichert.
11. Modifizieren dieser im vorhergehenden Signalisierungsschritt 10 vom SIP-Server S1 empfangenen "200-OK" Nachricht durch den SIP-Server S1 wobei die Zieladresse des IPv4-fähigen Endgeräts T2 mit der IPv6-Adresse des Adressumsetzers AU ersetzt wird, und zustellen dieser modifizierten "200-OK-mod" Nachricht an das IPv6-fähige Endgerät T1
12. Beginn der Datenübertragung zwischen dem IPv6-fähigen Endgerät T1 und dem IPv4-fähigen Endgerät T2 mittels Datenpaketen, wobei der Adressumsetzer AU jeweils als Zieladresse der von den Endgeräten T1, T2 ausgehenden Datenpakete eingetragen ist und der Adressumsetzer AU den entsprechenden Austausch des IP Protokoll Headers inklusive der Quell- und Zieladressen der empfangenen Datenpakete vornimmt und die Datenpakete an diese ausgetauschte Zieladresse weiterleitet.

**Fig.4** zeigt beispielhaft und schematisch den prinzipiellen Ablaufs der Signalisierung des erfindungsgemäßen Verfahrens bei Einsatz eines Konferenzservers. Es sind die Signalisierungsnachrichten in einem Kommunikationsnetz gemäß Fig.2 dargestellt, welche zwischen den beteiligten Endgeräten T1, T2, dem SIP-Server S1 und dem Konferenzserver KS, welcher einen Adressumsetzer AU umfasst, bei der Aufnahme der Datenübertragung von einem IPv6-fähigen Endgerät T1 zu einem IPv4-fähigen Endgerät T2 übertragen werden. Der zweite SIP-Server S2 nimmt keine Veränderungen an den durch ihn geleiteten Nachrichten vor und ist deshalb nicht dargestellt. Die Signalisierung umfasst folgende Ablaufschritte:
1. Senden einer "Invite 1" Nachricht von einem IPv6-fähigen Endgerät T1 zu einem IPv4-fähigen Endgerät T2. Diese "Invite 1" Nachricht enthält eine Übertragungsbeschreibung (SDP, engl. Session Description Protokoll) und die IPv6-Adresse des Endgeräts T1, welche für das IPv4-fähige Engerät T2 unverständlich ist. Der SIP-Server S1 speichert diese "Invite 1" Nachricht, modifiziert diese "Invite 1" Nachricht jedoch nicht.
2. Senden einer "488 Not acceptable here" Antwortnachricht durch das IPv4-fähige Endgerät T2 auf diese, für das IPv4-fähige Endgerät T2 unverständliche, Nachricht. Diese Nachricht wird vom SIP-Server S1 empfangen und nicht an das IPv6-fähige Endgerät T1 weitergeleitet.
3. Senden einer "Refer"-Nachricht vom SIP-Server S1 an den Konferenzserver KS, beinhaltend eine Übertragungsbeschreibung der gewünschten Art von Datenübertragung für eine IPv4 Adresse.
4. Senden einer "Invite"-Nachricht vom Konferenzserver KS an den SIP-Server S1, beinhaltend eine Bestätigung der gewünschten Datenübertragung, wobei die IPv4 Adresse des Konferenzservers enthalten ist.
5. Weiterleiten dieser im vorgehenden Signalisierungsschritt 4 vom SIP-Server S1 empfangenen "Invite"-Nachricht an das IPv4-fähige Endgerät T2.
6. Senden einer "Invite 1 mod" Nachricht vom SIP-Server S1 an den Konferenzserver KS, wobei die im Signalisierungsschritt 1 vom SIP-Server S1 empfangene "Invite 1" Nachricht um einen sogenannten "Join" Teil erweitert ist, welcher auf die "Invite"-Nachricht des Signalisierungsschritts 4 verweist.
7. Senden einer die erfolgreiche Initialisierung bestätigenden "200-OK"-Nachricht des Konferenzservers KS an den SIP-Server S1, beinhaltend die IPv6-Adresse des Konferenzservers KS.
8. Senden einer "180 Ringing" Nachricht, welche den Empfang und die Gültigkeit der empfangenen "Invite 2" Nachricht bestätigt, vom IPv4-fähigen Endgerät T2 an den SIP-Server S1 und speichern dieser Nachricht im SIP-Server S1 und weiterleiten dieser Nachricht an den Konferenzserver KS.
9. Senden einer "180 Ringing IPv6" Nachricht vom SIP-Server S1 an das IPv6-fähige Endgerät T1, welche aus der im vorhergehenden Signalisierungsschritt 8 "180 Ringing" Nachricht besteht, wobei die IPv6 Adresse des Konferenzservers beinhaltet ist.
10. Senden einer den erfolgreichen Verbindungsaufbau bestätigenden "200-OK"-Nachricht vom IPv4-fähigen Endgerät T2 an den SIP-Server S1 und speichern dieser Nachricht im SIP-Server S1.
11. Weiterleiten dieser im vorhergehenden Signalisierungsschritt 10 empfangenen "200-OK"-Nachricht vom SIP-Server S1 an den Konferenzserver KS.
12. Modifizieren der im Signalisierungsschritt 10 empfangenen "200-OK"-Nachricht durch den SIP-Server S1, wobei die IPv6-Adresse des Konferenzservers beinhaltet ist und weiterleiten dieser "200 OK IPv6"-Nachricht an das IPv6-fähige Endgerät T1.
13. Beginn der Datenübertragung zwischen dem IPv6-fähigen Endgerät T1 und dem IPv4-fähigen Endgerät T2 mittels Datenpaketen, wobei der Konferenzserver KS jeweils als Zieladresse der von den Endgeräten T1, T2 ausgehenden Datenpakete eingetragen ist und der Konferenzserver KS den entsprechenden Austausch der IP Protokoll Header inklusive der Quell- und Zieladressen der empfangenen Datenpakete vornimmt und die Datenpakete an diese ausgetauschte Zieladresse weiterleitet.

Gemäß einem weiteren erfindungsgemäßen Ausführungsbeispiel kann analog zu dem an Hand der Fig. 1-4 erläuterten Ausführungsbeispiel die Verbindungsaufnahme statt von einem IPv6-fähigen Datengerät T1 auch von einem IPv4-fähigen Datenendgerät T2 zu einem IPv6-fähigen Datenendgerät T1 eine bestimmte, den Verbindungswunsch anzeigende Nachricht gesandt wird, welche für das IPv6-fähige Datenendgerät T1 unverständlich ist, da die in dieser Nachricht enthaltene IPv4-Adresse des die Verbindung initiierenden Datenendgeräts T2 vom IPv6-fähigen Datenendgerät T1 nicht verwendet werden kann. Erfindungsgemäß wird die vom IPv6-fähigen Datenendgerät T1 daraufhin gesandte Nachricht, welche einen unverständlichen Verbindungsaufnahmewunsch anzeigt, von dem den Adressumsetzer AU enthaltenden SIP-Server S1 abgefangen und nicht dem IPv4-fähigen Datenendgerät T2 zugestellt.

Solcherart gelingt es in gleicher Weise wie bei der erfindungsgemäßen Lösung gemäß dem Hauptaspekt, mittels des SIP-Servers S2 und eines gemäß Fig. 1 darin angeordneten Adressumsetzers AU die zur Verbindungsaufnahme erforderlichen Signalisierungsnachrichten ausschließlich zwischen dem beteiligten IPv4-fähigen Datenendgerät und dem SIP-Server sowie dem IPv6-fähigen Datenendgerät und dem SIP-Server auszutauschen, wobei jedem Datenendgerät ein Verbindungspartner mit kompatibler IP-Version dargeboten wird.

In einer gegenüber Fig. 1 abgewandelten und nicht dargestellten Ausführungsform kann der Adressumsetzer auch in einem von dem SIP-Server S1 getrennten Server angeordnet sein.

Die Verbindungsaufnahme zu einem IPv6-fähigen Datenendgerät T1 stellt sich bei der weiteren Ausführungsform (Nebenaspekt) für ein IPv4-fähiges Datenendgerät T2 gleichartig dar wie bei einer Verbindungsaufnahme zu einem IPv4-fähigen Datenendgerät T2. Seitens des IPv6-fähigen Datenendgeräts T1 führt eine Verbindungsaufnahme durch ein IPv4-fähiges Datenendgerät T2 zu einer einmaligen Aussendung einer den Verbindungswunsch zurückweisenden Nachricht.

Das erfindungsgemäße Verfahren zur bidirektionalen Adressumsetzung in SIP-gesteuerten Datenströmen zwischen IPv4-fähigen Datenendgeräten T2 und IPv6-fähigen Datenendgeräten T1 mittels eines Adressumsetzers AU und eines SIP-Servers S1, erfolgt gemäß der weiteren Ausführungsform mit folgenden Schritten:

Die zu diesen Schritten a) bis e) erforderlichen Ablaufschritte der Signalisierung erfolgen in entsprechender Weise zu den in den Fig. 3 und 4 dargestellte Signalisierungen, wobei die Aufnahme der Datenübertragung von einem IPv4-fähigen Datenendgerät ausgeht.
a) erkennen des Aufbau einer Verbindung von einem IPv4-fähigen Datenendgerät T2 als rufendem Teilnehmer zu einem IPv6-fähigen Datenendgerät T1 als gerufenem Teilnehmer anhand einer, diesen Verbindungswunsch abweisenden Nachricht des gerufenen IPv6-fähigen Datenendgeräts T1 durch einen SIP Server S1,
b) bestimmen einer jeweils kompatiblen IPv4-Adresse durch den Adressumsetzer AU als Zieladresse der Verbindung und übermitteln dieser IPv4-Adresse an das IPv4-fähige Datenendgerät T2 beim Aufbau einer Verbindung von einem IPv6-fähigen Datenendgerät T1 zu einem IPv4-fähigen Datenendgerät T2,
c) bestimmen einer jeweils kompatiblen IPv6-Adresse durch den Adressumsetzer AU als Zieladresse der Verbindung und übermitteln dieser kompatiblen IPv6-Adresse an das IPv6-fähige Datenendgerät T1,
d) empfangen der von den Datenendgeräten T1 und T2 an diese jeweiligen Zieladressen gesandten Datenpakete durch den Adressumsetzer AU und
e) austauschen der entsprechenden Zieladresse in den Datenpaketen durch den Adressumsetzer AU und senden der Datenpakete an die Zieladresse des jeweiligen Verbindungspartners.

Die erfindungsgemäße Einrichtung gemäß der weiteren Ausführungsform (Nebenaspekt) zur bidirektionalen Adressumsetzung in SIP-gesteuerten Datenströmen zwischen IPv4-fähigen Datenendgeräten T2 im IPv6-fähigen Datenendgeräten T1 mittels eines Adressumsetzers AU und SIP-Servern S1, umfassen Mittel, welche
a) im SIP Server S1 den Aufbau einer Verbindung von einem IPv4-fähigen Datenendgerät T2 zu einem IPv6-fähigen Datenendgerät T1 an der vom IPv6-fähigen Datenendgerät T1 als Reaktion auf einen Verbindungswunsch von einem IPv4-fähigen Datenendgerät T2 abgesandten, diesen Verbindungswunsch abweisenden Nachricht erkennen,
b) im Adressumsetzer AU, für die beteiligten IPv4-fähigen Datenendgeräte T2 jeweils eine kompatible IPv4-Adresse als Zieladresse der Verbindung bestimmen und an die IPv4-fähigen Datenendgeräte T2 übermitteln,
c) im Adressumsetzer AU, für die beteiligten IPv6-fähigen Datenendgeräte T1 jeweils eine kompatible IPv6-Adresse als Zieladresse der Verbindung bestimmen und an die IPv6-fähigen Datenendgeräte T1 übermitteln,
d) im Adressumsetzer AU, die von den Datenendgeräten T1 und T2 an diese jeweiligen Zieladressen gesandten Datenpakete empfangen und den entsprechenden Austausch der Zieladresse in den Datenpaketen vornehmen, und
e) im Adressumsetzer AU, die Datenpakete an die Zieladresse des jeweiligen Verbindungspartners senden.

Wie in Fig. 1 dargestellt, ist der Adressumsetzer AU in dem SIP-Server S1 angeordnet.

In einer gegenüber Fig. 1 abgewandelten und nicht dargestellten Ausführungsform kann der Adressumsetzer AU in einem von dem SIP-Server S1 getrennten Server angeordnet sein.

### Liste der Bezeichnungen

- S1: SIP-Server
- S2: zweiter SIP-Server
- AU: Adressumsetzer
- T1: IPv6-fähige Endgeräte
- T2: IPv4-fähige Endgeräte
- KS: Konferenzserver
- ND IPv4: Nutzdaten mit IPv4 Zieladresse
- ND IPv6: Nutzdaten mit IPv6 Zieladresse

## Patentansprüche

1. Verfahren zur bidirektionalen Adressumsetzung in SIP-gesteuerten Nutzdatenströmen (ND IPv4, ND IPv6) zwischen IPv4-fähigen Datenendgeräten (T2) und IPv6-fähigen Datenendgeräten (T1) mittels eines Adressumsetzers (AU) und eines SIP-Servers (S1), mit folgenden Schritten:
a) erkennen des Aufbau einer Verbindung von einem IPv6-fähigen Datenendgerät (T1) als rufendem Teilnehmer zu einem IPv4-fähigen Datenendgerät (T2) als gerufenem Teilnehmer anhand einer, diesen Verbindungswunsch abweisenden Nachricht des gerufenen IPv4-fähigen Datenendgeräts (T2) durch einen SIP Server (S1),
b) bestimmen einer jeweils kompatiblen IPv4-Adresse durch den Adressumsetzer (AU) als Zieladresse der Verbindung und übermitteln dieser IPv4-Adresse an das IPv4-fähige Datenendgerät (T2) beim Aufbau einer Verbindung von einem IPv6-fähigen Datenendgerät (T1) zu einem IPv4-fähigen Datenendgerät (T2),
c) bestimmen einer jeweils kompatiblen IPv6-Adresse durch den Adressumsetzer (AU) als Zieladresse der Verbindung und übermitteln dieser kompatiblen IPv6-Adresse an das IPv6-fähige Datenendgerät (T1),
d) empfangen der von den Datenendgeräten (T1, T2) an diese jeweiligen Zieladressen gesandten Nutzdatenpakete (ND IPv4, ND IPv6) durch den Adressumsetzer (AU) und
e) austauschen der entsprechenden Zieladresse in den Nutzdatenpaketen (ND IPv4, ND IPv46) durch den Adressumsetzer (AU) und senden der Nutzdatenpakete (ND IPv4, ND IPv6) an die Zieladresse des jeweiligen Verbindungspartners.

2. Verfahren zur bidirektionalen Adressumsetzung in SIP-gesteuerten Nutzdatenströmen (ND IPv4, ND IPv6) zwischen IPv4-fähigen Datenendgeräten (T2) und IPv6-fähigen Datenendgeräten (T1) mittels eines Adressumsetzers (AU) und eines SIP-Servers (S1), mit folgenden schritten:
a) erkennen des Aufbau einer Verbindung von einem IPv**4-**fähigen Datenendgerät (T**2**) als rufendem Teilnehmer zu einem IPv**6**-fähigen Datenendg**e**rät (T**1**) als gerufenem Teilnehmer anhand einer, diesen Verbindungswunsch abweisenden Nachricht des gerufenen IPv**6**-fähigen Datenendgerät (T1) durch einen SIP Server (S**1**),
b) bestimmen einer jeweils kompatiblen IPv4-Adresse durch den Adressumsetzer (AU) als Zieladresse der Verbindung und übermitteln dieser IPv4-Adresse an das IPv4-fähige Datenendgerät (T2) beim Aufbau einer Verbindung von einem IPv6-fähigen Datenendgerät (T1) zu einem IPv4-fähigen Datenendgerät (T2),
c) bestimmen einer jeweils kompatiblen IPv6-Adresse durch den Adressumsetzer (AU) als Zieladresse der Verbindung und übermitteln dieser kompatiblen IPv6-Adresse an das IPv6-fähige Datenendgerät (T1),
d) empfangen der von den Datenendgeräten (T1, T2) an diese jeweiligen Zieladressen gesandten Nutzdatenpakete (ND IPv4, ND IPv6) durch den Adressumsetzer (AU) und
e) austauschen der entsprechenden Zieladresse in den Nutzdatenpaketen (ND IPv4, ND IPv6) durch den Adressumsetzers (AU) und senden der Nutzdatenpakete (ND IPv4, ND IPv6) an die Zieladressen des jeweiligen Verbindungspartners.

3. Verfahren nach Anspruch 1 oder 2, **dadurch gekennzeichnet, dass** der Adressumsetzer (AU) in einem von dem SIP-Server (S1) getrennten Server angeordnet ist.

4. Verfahren nach einem der Ansprüche 1 bis 3, **dadurch gekennzeichnet, dass** die Adressumsetzerfunktionalität eines Konferenzservers (KS) als Adressumsetzer (AU) eingesetzt wird (Fig.2).

5. Einrichtung zur bidirektionalen Adressumsetzung in SIP-gesteuerten Nutzdatsnatrömen (ND IPv4, ND IPv6) zwischen IPv4-fähigen SIP-Servern (S1), welche Mittel umfassen, welche
a) im SIP-Server (S1) den Aufbau einer Verbindung von einem IPv6-fähigen Datenendgerät (T1) zu einem IPv4-fähigen Datenendgerät (T2) an der vom IPv4-fähigen Datenendgerät (T2) als Reaktion auf einen Verbindungswunsch von einem IPv6-fähigen Datenendgerät (T1) abgesandten, diesen Verbindungswunsch abweisenden Nachricht erkennen,
b) im Adressumsetzer (AU), für die beteiligten IPv4-fähigen Datenendgeräte (T2) jeweils eine kompatible IPv4-Adresse als Zieladresse der Verbindung bestimmen und an die IPv4-fähigen Datenendgeräten (T2) übermitteln,
c) im Adressumsetzer (AU), für die beteiligten IPv6-fähigen Datenendgeräte (T1 jeweils eine kompatible IPv6-Adresse als Zieladresse der Verbindung bestimmen und an die IPv6-fähigen Datenendgeräte (T1) übermitteln,
d) im Adressumsetzer (AU), die von den Datenendgeräten (T1, T2) an diese jeweiligen Zieladressen gesandten Nutzdatenpakete (ND IPv4, ND IPv6) empfangen und den entsprechenden Austausch der Zieladresse in den Nutzdatenpaketen (ND IPv4, ND IPv6) vornehmen, und
e) im Adressumsetzer (AU), die Nutzdatenpakete (ND IPv4, ND IPv46) an die Zieladresse des jeweiligen Verbindungspartners senden .

6. Einrichtung zur bidirektionalen Adressumsetzung in SIP-gesteuerten Nutzdatenströmen (ND IPv4, ND IPv6) zwischen IPv4-fähigen Datenendgeräten (T2) im IPv6-fähigen Datenendgeräten (T1) mittels eines Adressumsetzers (AU) und SIP-Servern (S1), welche Mittel umfassen, welche
a) im SIP Server (S1) den Aufbau einer Verbindung von einem IPv**4**-fähigen Datenendgerät (T**2** zu einem IPv**6**-fähigen Datenendgerät (T1) an der vom IPv**6-**fähigen Datenendgerät (T**1**) als Reaktion auf einen Verbindungswunsch vcn einem IPv**4**-fähigen Datenendgerät (T**2**) abgewandten, diesen Verbindungswunsch abweisenden Nachricht erkennen,
b) im Adressumsetzers (AU), für die beteiligten IPv4-fähigen Datenendgeräte (T2) jeweils eine kompatible IPv4-Adresse als Zieladresse der Verbindung bestimmen und an die IPv4-fähigen Datenendgeräte (T2) übermitteln,
c) im Adressumsetzer (AU), für die beteiligten IPv6-fähigen Datenendgeräte (T1) jeweils eine kompatible IPv6-Adresse als Zieladresse der Verbindung bestimmen und an die IPv6-fähigen Datenendgeräte (T1) übermitteln,
d) im Adressumsetzer (AU), die von den Datenendgeräten (T1, T2) an diese jeweiligen Zieladressen gesandten Nutzdatenpakete (ND IPv4, ND IPv6) empfangen und den entsprechenden Austausch der Zieladresse in den Nutzdatenpaketen (ND IPv4, ND IPv6) vornehmen, und
e) im Adressumsetzer (AU), die Nutzdatenpakete (ND IPv4, ND IPv6) an die Zieladresse des jeweiligen Verbindungspartners senden.

7. Einrichtung nach Anspruch 5 oder 6, **dadurch gekennzeichnet, dass** der Adressumsetzer (AU) in einem von dem SIP-Server (S1) getrennten Server angeordnet ist.

## Claims

1. A method for the bidirectional address conversion in SIP-controlled user data streams (ND IPv4, ND IPv6) between IPv4-enabled data terminals (T2) and IPv6-enabled data terminals (T1) by means of an address converter (AU) and an SIP server (S1) with the following steps:
a) detecting, by an SIP server (S1), the establishment of a connection from an IPv6-enabled data terminal (T1) as the calling subscriber to an IPv4-enabled data terminal (T2) as the called subscriber based on a message from the called IPv4-enabled data terminal (T2) rejecting said connection request,
b) determining, by said address converter (AU), a respective compatible IPv4 address as the destination address of the connection and transmitting said IPv4 address to the IPv4-enabled data terminal (T2) when establishing a connection from an IPv6-enabled data terminal (T1) to an IPv4-enabled data terminal (T2),
c) determining, by said address converter (AU), a respective compatible IPv6 address as the destination address of the connection and transmitting said compatible IPv6 address to the IPv6-enabled data terminal (T1),
d) receiving, by said address converter (AU), the user data packets (ND IPv4, ND IPv6) sent by said data terminals (T1, T2) to said respective destination addresses, and
e) exchanging, by said address converter (AU), the corresponding destination address in the user data packets (ND IPv4, ND IPv6) and sending said user data packets (ND IPv4, ND IPv6) to the destination address of the respective connection partner.

2. A method for the bidirectional address conversion in SIP-controlled user data streams (ND IPv4, ND IPv6) between IPv4-enabled data terminals (T2) and IPv6-enabled data terminals (T1) by means of an address converter (AU) and an SIP server (S1) with the following steps:
a) detecting, by an SIP server (S1), the establishment of a connection from an IPv4-enabled data terminal (T2) as the calling subscriber to an IPv6-enabled data terminal (T1) as the called subscriber based on a message from the called IPv6-enabled data terminal (T1) rejecting said connection request,
b) determining, by said address converter (AU), a respective compatible IPv4 address as the destination address of the connection and transmitting said IPv4 address to the IPv4-enabled data terminal (T2) when establishing a connection from an IPv6-enabled data terminal (T1) to an IPv4-enabled data terminal (T2),
c) determining, by said address converter (AU), a respective compatible IPv6 address as the destination address of the connection and transmitting said compatible IPv6 address to the IPv6-enabled data terminal (T1),
d) receiving, by said address converter (AU), the user data packets (ND IPv4, ND IPv6) sent by said data terminals (T1, T2) to said respective destination addresses, and
e) exchanging, by said address converter (AU), the corresponding destination address in the user data packets (ND IPv4, ND IPv6) and sending said user data packets (ND IPv4, ND IPv6) to the destination address of the respective connection partner.

3. The method according to claim 1 or 2, **characterized in that** the address converter (AU) is arranged within a server separate from said SIP server (S1).

4. The method according to any of claims 1 to 3, **characterized by** using the address converter functionality of a conference server (KS) as an address converter (AU) (Fig.2).

5. A device for the bidirectional address conversion in SIP-controlled user data streams (ND IPv4, ND IPv6) between IPv4-enabled SIP servers (S1) comprising means which
a) detect, in said SIP server (S1), the establishment of a connection from an IPv6-enabled data terminal (T1) to an IPv4-enabled data terminal (T2) based on the message sent by said IPv4-enabled data terminal (T2) in response to a connection request by an IPv6-enabled data terminal (T1) rejecting said connection request,
b) determine, in said address converter (AU), for each participating IPv4-enabled data terminal (T2) a respective compatible IPv4 address as the destination address of the connection and transmit them to the IPv4-enabled data terminals (T2),
c) determine, in said address converter (AU), for each participating IPv6-enabled data terminal (T1) a respective compatible IPv6 address as the destination address of the connection and transmit them to the IPv6-enabled data terminals (T1),
d) receive, in said address converter (AU), the user data packets (ND IPv4, ND IPv6) sent bv said data terminals (T1, T2) to said respective destination addresses and perform the corresponding exchange of said destination address in the user data packets (ND IPv4, ND IPv6), and
e) send, in said address converter (AU), said user data packets (ND IPv4, ND IPv6) to the destination address of the respective connection partner.

6. A device for the bidirectional address conversion in SIP-controlled user data streams (ND IPv4, ND IPv6) between IPv4-enabled data terminals (T2) in IPv6-enabled data terminals (T1) by means of an address converter (AU) and SIP servers (S1) comprising means which
a) detect, in said SIP server (S1), the establishment of a connection from an IPv4-enabled data terminal (T2) to an IPv6-enabled data terminal (T1) based on the message sent by said IPv6-enabled data terminal (T1) in response to a connection request by an IPv4-enabled data terminal (T2) rejecting said connection request,
b) determine, in said address converter (AU), for each participating IPv4-enabled data terminal (T2) a respective compatible IPv4 address as the destination address of the connection and transmit them to the IPv4-enabled data terminals (T2),
c) determine, in said address converter (AU), for each participating IPv6-enabled data terminal (T1) a respective compatible IPv6 address as the destination address of the connection and transmit them to the IPv6-enabled data terminals (T1),
d) receive, in said address converter (AU), the user data packets (ND IPv4, ND IPv6) sent by said data terminals (T1, T2) to said respective destination addresses and perform the corresponding exchange of said destination address in the user data packets (ND IPv4, ND IPv6), and
e) send, in said address converter (AU), said user data packets (ND IPv4, ND IPv6) to the destination address of the respective connection partner.

7. The device according to claim 5 or 6, **characterized in that** the address converter (AU) is arranged within a server separate from said SIP server (S1).

## Revendications

1. Procédé de conversion d'adresse bidirectionnelle dans des flux de données utiles à commande SIP (ND IPv4, ND IPv6) entre des terminaux de traitement de données compatibles IPv4 (T2) et des terminaux de traitement de données compatibles IPv6 (T1) au moyen d'un convertisseur d'adresse (AU) et d'un serveur SIP (S1), avec les étapes suivantes :
a) détection de l'établissement d'une connexion d'un terminal de traitement de données compatible IPv6 (T1) comme abonné appelant à un terminal de traitement de données compatible IPv4 (T2) comme abonné appelé à l'aide d'un message, du terminal de traitement de données compatible IPv4 (T2) appelé, refusant cette demande de connexion par un serveur SIP (S1),
b) détermination d'une adresse IPv4 respectivement compatible par le convertisseur d'adresse (AU) comme adresse cible de la connexion et transmission de cette adresse IPv4 au terminal de traitement de données compatible IPv4 (T2) lors de l'établissement d'une connexion d'un terminal de traitement de données compatible IPv6 (T1) à un terminal de traitement de données compatible IPv4 (T2),
c) détermination d'une adresse IPv6 respectivement compatible par le convertisseur d'adresse (AU) comme adresse cible de la connexion, et transmission de cette adresse IPv6 compatible au terminal de traitement de données compatible IPv6 (T1),
d) réception des paquets de données utiles (ND IPv4, ND IPv6) envoyés par les terminaux de traitement de données (T1, T2) à ces adresses cible respectives par le convertisseur d'adresse (AU), et
e) échange de l'adresse cible correspondante dans les paquets de données utiles (ND IPv4, ND IPv6) par le convertisseur d'adresse (AU) et envoi des paquets de données utiles (ND IPv4, ND IPv6) à l'adresse cible du partenaire de connexion respectif.

2. Procédé de conversion d'adresse bidirectionnelle dans des flux de données utiles à commande SIP (ND IPv4, ND IPv6) entre des terminaux de traitement de données compatibles IPv4 (T2) et des terminaux de traitement de données compatibles IPv6 (T1) au moyen d'un convertisseur d'adresse (AU) et d'un serveur SIP (S1), avec les étapes suivantes :
a) détection de l'établissement d'une connexion d'un terminal de traitement de données compatible IPv4 (T2) comme abonné appelant à un terminal de traitement de données compatible IPv6 (T1) comme abonné appelé à l'aide d'un message, du terminal de traitement de données compatible IPv6 (T1) appelé, refusant cette demande de connexion par un serveur SIP (S1),
b) détermination d'une adresse IPv4 respectivement compatible par le convertisseur d'adresse (AU) comme adresse cible de la connexion, et transmission de cette adresse IPv4 au terminal de traitement de données compatible IPv4 (T2) lors de l'établissement d'une connexion d'un terminal de traitement de données compatible IPv6 (T1) à un terminal de traitement de données compatible IPv4 (T2),
c) détermination d'une adresse IPv6 respectivement compatible par le convertisseur d'adresse (AU) comme adresse cible de la connexion, et transmission de cette adresse IPv6 compatible au terminal de traitement de données compatible IPv6 (T1),
d) réception des paquets de données utiles (ND IPv4, ND IPv6) envoyés par les terminaux de traitement de données (T1, T2) à ces adresses cible respectives par le convertisseur d'adresse (AU), et
e) échange de l'adresse cible correspondante dans les paquets de données utiles (ND IPv4, ND IPv6) par le convertisseur d'adresse (AU) et envoi des paquets de données utiles (ND IPv4, ND IPv6) à l'adresse cible du partenaire de connexion respectif.

3. Procédé selon la revendication 1 ou 2, **caractérisé en ce que** le convertisseur d'adresse (AU) est agencé dans un serveur séparé du serveur SIP (S1).

4. Procédé selon l'une quelconque des revendications 1 à 3, **caractérisé en ce que** la fonctionnalité du convertisseur d'adresse d'un serveur de conférence (KS) est utilisée comme convertisseur d'adresse (AU) (fig.2).

5. Dispositif de conversion d'adresse bidirectionnelle dans des flux de données utiles à commande SIP (ND IPv4, ND IPv6) entre des serveurs SIP compatibles IPv4 (S1), qui comprennent des moyens, qui
a) détectent, dans le serveur SIP (S1), l'établissement d'une connexion d'un terminal de traitement de données compatible IPv6 (T1) à un terminal de traitement de données compatible IPv4 (T2) à l'aide du message envoyé par le terminal de traitement de données compatible IPv4 (T2) en réaction à une demande de connexion d'un terminal de traitement de données compatible IPv6 (T1) et refusant cette demande de connexion,
b) déterminent, dans le convertisseur d'adresse (AU), pour les terminaux de traitement de données compatibles IPv4 (T2) participants respectivement une adresse IPv4 compatible comme adresse cible de la connexion et la transmettent aux terminaux de traitement de données compatibles IPv4 (T2),
c) déterminent, dans le convertisseur d'adresse (AU), pour les terminaux de traitement de données compatibles IPv6 (T1) participants respectivement une adresse IPv6 compatible comme adresse cible de la connexion et la transmettent aux terminaux de traitement de données compatibles IPv6 (T1),
d) reçoivent, dans le convertisseur d'adresse (AU), les paquets de données utiles (ND IPv4, ND IPv6) envoyés par les terminaux de traitement de données (T1, T2) à ces adresses cible respectives et procèdent à l'échange correspondant de l'adresse cible dans les paquets de données utiles (ND IPv4, ND IPv6), et
e) envoient, dans le convertisseur d'adresse (AU), les paquets de données utiles (ND IPv4, ND IPv6) à l'adresse cible du partenaire de connexion respectif.

6. Dispositif de conversion d'adresse bidirectionnelle dans des flux de données utiles à commande SIP (ND IPv4, ND IPv6) entre des terminaux de traitement de données compatibles IPv4 (T2) dans le terminal de traitement de données compatible IPv6 (T1) au moyen d'un convertisseur d'adresse (AU) et des serveurs SIP (S1), qui comprennent des moyens, qui
a) détectent, dans le serveur SIP (S1), l'établissement d'une connexion d'un terminal de traitement de données compatible IPv4 (T2) à un terminal de traitement de données compatible IPv6 (T1) à l'aide du message envoyé par le terminal de traitement de données compatible IPv6 (T1) en réaction à une demande de connexion d'un terminal de traitement de données compatible IPv4 (T2) et refusant cette demande de connexion,
b) déterminent, dans le convertisseur d'adresse (AU), pour les terminaux de traitement de données compatibles IPv4 (T2) participants respectivement une adresse IPv4 compatible comme adresse cible de la connexion et la transmettent aux terminaux de traitement de données compatibles IPv4 (T2),
c) déterminent, dans le convertisseur d'adresse (AU), pour les terminaux de traitement de données compatibles IPv6 (T1) participants respectivement une adresse IPv6 compatible comme adresse cible de la connexion et la transmettent aux terminaux de traitement de données compatibles IPv6 (T1),
d) reçoivent, dans le convertisseur d'adresse (AU), les paquets de données utiles (ND IPv4, ND IPv6) envoyés par les terminaux de traitement de données (T1, T2) à ces adresses cible respectives et procèdent à l'échange correspondant de l'adresse cible dans les paquets de données utiles (ND IPv4, ND IPv6), et
e) envoient, dans le convertisseur d'adresse (AU), les paquets de données utiles (ND IPv4, ND IPv6) à l'adresse cible du partenaire de connexion respectif.

7. Dispositif selon la revendication 5 ou 6, **caractérisé en ce que** le convertisseur d'adresse (AU) est agencé dans un serveur séparé du serveur SIP (S1).
